Europäisches Patentamt

European Patent Office

Office européen des brevets

(11) Publication number: **0 210 669**
**A1**

(12) # EUROPEAN PATENT APPLICATION

(21) Application number: 86200369.6

(51) Int. Cl.⁴: **H02K 15/00**

(22) Date of filing: 10.03.86

(30) Priority: 26.07.85 IT 2262785 U

(43) Date of publication of application:
04.02.87 Bulletin 87/06

(84) Designated Contracting States:
CH DE FR GB LI SE

(71) Applicant: AXIS S.p.A.

I-50028 Tavarnelle Val di Pesa Firenze(IT)

(72) Inventor: Santandrea, Luciano
Via Aldo Moro, 77
I-50028 Tavarnelle Val Di Pesa (FI)(IT)
Inventor: Luciani, Sabatino
Via di Querceto, 169
I-50019 Sesto Fiorentino (FI)(IT)

(74) Representative: Lotti, Giorgio
c/o Ing. Barzanò & Zanardo Milano S.p.A. Via
Cernaia 20
I-10122 Torino(IT).

(54) **Pallet, advancing on conveyor belts along a line for the processing of stators and rotors of electrical motors, on which said elements are assembled as couples.**

(57) Pallet (10) advancing on conveyor belts along lines for the processing of stators (14) and/or rotors - (12) of electrical motors characterized in that the pallet is prearranged to support two of such components of electrical motors abreast and advances between two processing lines, the stations of which process alternately said components carried by the pallet.

# Fig.3

EP 0 210 669 A1

## "PALLET, ADVANCING ON CONVEYOR BELTS ALONG A LINE FOR THE PROCESSING OF STATORS AND ROTORS OF ELECTRICAL MOTORS, ON WHICH SAID ELEMENTS ARE ASSEMBLED AS COUPLES"

The invention relates to a pallet, advancing on conveyor belts along a line for the processing of stators and rotors of electrical motors, on which such elements are assembled as couples.

During the last years lines have adopted, which envisage that the stators and the rotors are not directly assembled on conveyor belts any more, but on pallets advancing on the belts themselves.

The Applicant has proposed, respectively in the patent application N° 21532-A/85 of July 11th, 1985; and in the patent application N° 21624-A/85 of July 18th, 1985, a type of pallet-stator and pallet-rotor link, which allows any types of operations on the pieces respectively carried to be worked out.

These are however embodiments wherein each pallet bears only one stator or only one rotor, and the processing line is hence structured in such a way that its various stations may handle only one type of component with constant sizes at a time.

It is now the purpose of the present invention to provide a pallet, whereon either two stators, or two rotors either of the same, or of different sizes, or even one stator and one rotor can be assembled.

There is, in practice, a pallet carrying two equal pieces, or different pieces to be processed along the manufacturing line.

Obviously, the line shall be so prearranged as to have couples of stations, processing either alternately or successively either equal pieces or pieces of different sizes, or of different types, but always using either stations of traditional types or of the types as disclosed in the above mentioned patent applications to the same Applicant's name.

Purpose thereof is that two pieces are processed at the same time, with one conveying system only, whether they are either rotors or stators, or both of them; with a consequent greater line flexibility.

Having moreover one line only for the two processing cycles, the costs of both of them are reduced, in that coupling with each other the different controls of the provided stations is possible.

At last, an evident reduction in the working cycle time is obtained, as compared to the traditional cycles, in that two pieces, instead of one only, are processed at the same time.

To these and further purposes that shall be better understood from the following, the invention proposes it to provide a pallet, advancing on conveyor belts, along lines for the processing of stators and/or rotors of electrical motors, characterized in that such a pallet is prearranged so as to support two of such electrical motor components as positioned side by side, and that it advances between two processing lines, the stations of which alternately process said elements conveyed by the pallet.

The pallet according to the invention shall now be disclosed according to some of its embodiments, all of which achieve the same usefulness, using the same innovating concept, referring to the attached drawings, wherein:

Fig. 1 illustrates a pallet according to the invention, carrying two rotors of different size;

Fig. 2 illustrates a pallet according to the invention carrying two stators of different sizes;

Fig. 3 illustrates a pallet according to the invention carrying a stator and a rotor.

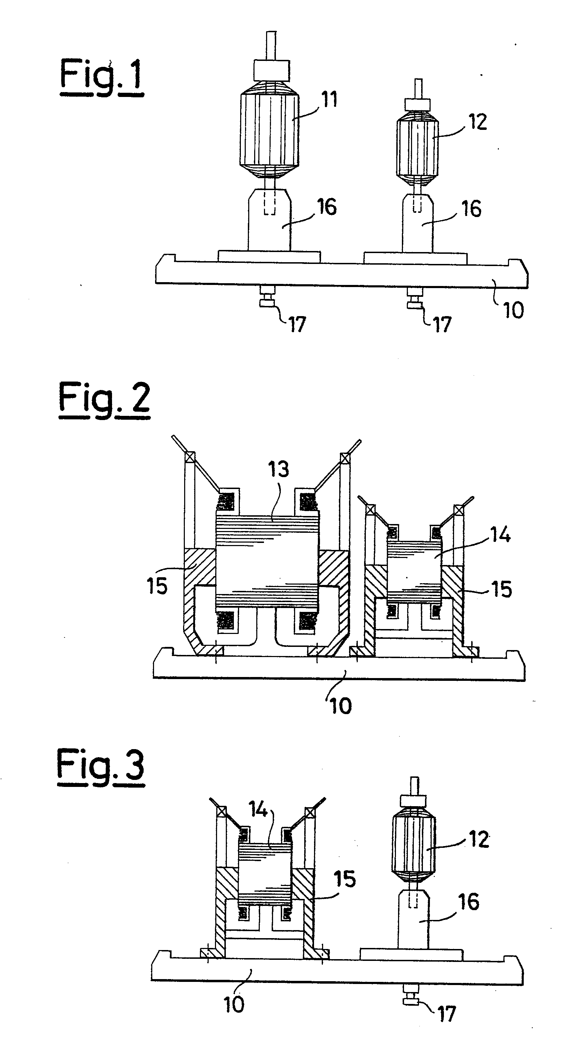

As it can be seen in figures 1 and 2, the pallet 10 according to the invention is prearranged to carry two electrical motor elements of different sizes being processed, respectively, either two rotors 11 and 12, or two stators 13 and 14.

Illustrating as such elements are supported on the pallet is useless, because the stators 13 and 14 are simply anchored onto the pallet through stiff structures 15. This anchoring system and its purposes are disclosed in detail in the patent Application n° 21532-A/85 of July 11th 1985 filed in the name of the same Applicant therefore it will not be illustred hereinunder. It is obvious that such a system results particularly advantageous to the purposes the pallet 10 is intended for according to the invention, but other systems also can be used without thereby going out the limits of the invention itself.

The same is true for the embodiment of fig. 1, wherein the rotors 11 and 12 are anchored to the pallet by structure 16, from which they can be released by pulling out the pivots 17. Such anchoring system and its purposes are disclosed in detail in the patent application n° 21624-A/85 of July 18th 1985 filed in the name of the same Applicant, therefore it will not be illustrated hereinunder. It is obvious that such a system results particularly advantageous to the purposes the pallet 10 is intended for, according to the invention, but other systems may also be used without, thereby, going out the limits of the invention itself.

In the specific case of the embodiments of figs. 1 and 2, the pallet advances along a line, wherein at one side stations are provided for the processing of elements (stators 13 or rotors 11) of greater sizes and at the other side stations are provided for the processing of elements (stators 14 or rotors 12) of smaller sizes. In the case of the embodiments of fig. 1 and 2, stations shall be advantageously used of the type as disclosed in the above-said patent applications to the same Applicant's name, wherein in the case of other embodiments, the stations shall be fitted to these different embodiments to allow the contemporary processing, alternately, of the two elements carried by the pallet 10 according to the purposes of the invention.

In the embodiment of fig. 3, on the contrary, the pallet 10 carries two different elements, one stator 14 and one rotor 12, constrained to the pallet 10 by means of related supports 15 and 16.

In this case, the line shall have stations for the machining of the stators at one side, and stations for the machining of the rotors at the other side, which are made operate alternately during the advancing of the pallet on the conveyor belt of the line.

**Claims**

1. Pallet advancing on conveyor belts along lines for the processing of stators and/or of rotors of electrical motors characterized in that the pallet is prearranged to support two of such components of electrical motors' abreast and advances between two processing lines, the stations of which process alternately said components carried by the pallet.

2. Pallet according to claim 1, characterized in that it supports two rotors of different sizes.

3. Pallet according to claim 1, characterized in that it supports two stators of different sizes.

4. Pallet according to claim 1, characterized in. that it supports one stator and one rotor.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 145 355 (MICAFIL AG) <br> * page 3, lines 54-76; page 3, lines 104-126; figures 1, 1' * | 1,2 | H 02 K 15/00 |
| | --- | | |
| A | US-A-3 924 816 (K. SCHUBERT et al.) <br> * abstract, figure 1 * | 1 | |
| | ----- | | |

TECHNICAL FIELDS
SEARCHED (Int. Cl.4)

H 02 K 15/00
B 65 G 37/00

The present search report has been drawn up for all claims

| Place of search | Date of completion of the search | Examiner |
|---|---|---|
| BERLIN | 30-09-1986 | WEIHS J.A. |